# EUROPEAN PATENT APPLICATION

(11) **EP 1 134 256 A1**
(43) Date of publication of application: **19.09.2001**
(21) Application number: 01302111.8
(22) Date of filing: 08.03.2001
(51) Int. Cl.: C08K 5/549, C08L 83/04

(54) **Silicone rubber composition**

(30) Priority: 17.03.2000 JP 2000075074
(71) Applicant: Dow Corning Toray Silicone Co., Ltd., Tokyo (JP)
(72) Inventor: Takuman, Osamu, Dow Corning Toray Silicone Co.,, Ichihara-shi, Chiba Prefecture (JP); Nishiumi, Wataru, Dow Corning Toray Silicone Co.,, Ichihara-shi, Chiba Prefecture (JP); Shinmi, Hideo, Dow Corning Toray Silicone Co.,, Ichihara-shi, Chiba Prefecture (JP)
(74) Representative: Kyle, Diana

(57) **Abstract**

A silicone rubber composition comprising
(A) 100 weight parts organopolysiloxane containing at least 2 silicon-bonded alkenyl groups in each molecule,
(B) SiH-functional diorganopolysiloxane having silicon-bonded hydrogen only at its two molecular chain terminals in an amount providing from 0.01 to 10 moles of silicon-bonded hydrogen per mole of silicon-bonded alkenyl in component (A),
(C) organopolysiloxane that contains at least 3 silicon-bonded hydrogen atoms in each molecule in an amount providing 0.5 to 20 moles of silicon-bonded hydrogen per mole of silicon-bonded alkenyl in component (A),
(D) 0.01 to 20 weight parts carbasilatrane derivative, and
(E) platinum catalyst, in a quantity sufficient to effect cure of the composition.

## Description

This invention relates to silicone rubber compositions and more particularly relates to a silicone rubber composition that is strongly adherent to a broad range of substrates.

Japanese Application Hei 10-195085 teaches a hydrosilylation-curing silicone rubber composition that contains a carbasilatrane derivative as adhesion promoter. The present inventors, however, have found that this silicone rubber composition does not exhibit a satisfactory adherence for some types of substrates.

As a result of extensive investigations directed to solving the problem identified above, the present inventors discovered that excellent adherence to a variety of substrates can be imparted to carbasilatrane derivative-containing hydrosilylation-curing silicone rubber compositions by the combined use therein of two types of SiH-functional organopolysiloxane curing agents. In specific terms, the object of this invention is to provide a silicone rubber composition that is strongly adherent to a broad range of substrates.

The present invention is a silicone rubber composition comprising
(A) 100 weight parts organopolysiloxane containing at least 2 silicon-bonded alkenyl groups in each molecule,
(B) SiH-functional diorganopolysiloxane having silicon-bonded hydrogen only at its two molecular chain terminals in an amount providing from 0.01 to 10 moles of silicon-bonded hydrogen per mole of silicon-bonded alkenyl in component (A),
(C) organopolysiloxane that contains at least 3 silicon-bonded hydrogen atoms in each molecule in an amount providing 0.5 to 20 moles of silicon-bonded hydrogen per mole of silicon-bonded alkenyl in component (A),
(D) 0.01 to 20 weight parts carbasilatrane derivative, and
(E) platinum catalyst in a quantity sufficient to effect cure of the composition.

The present invention is a silicone rubber composition comprising
(A) 100 weight parts organopolysiloxane containing at least 2 silicon-bonded alkenyl groups in each molecule,
(B) SiH-functional diorganopolysiloxane having silicon-bonded hydrogen only at its two molecular chain terminals in an amount providing from 0.01 to 10 moles of silicon-bonded hydrogen per mole of silicon-bonded alkenyl in component (A),
(C) organopolysiloxane that contains at least 3 silicon-bonded hydrogen atoms in each molecule in an amount providing 0.5 to 20 moles of silicon-bonded hydrogen per mole of silicon-bonded alkenyl in component (A),
(D) 0.01 to 20 weight parts carbasilatrane derivative with the following general formula 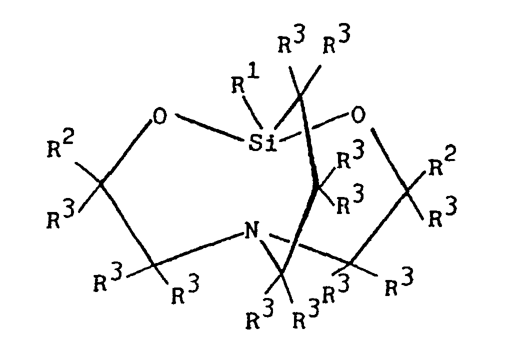 where R¹ is alkyl or alkoxy, each R² is independently selected from the group consisting of 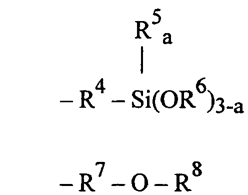 and where R⁴ is alkylene or alkyleneoxyalkylene, R⁵ is monovalent hydrocarbyl, R⁶ is alkyl, R⁷ is alkylene, R⁸ is alkyl, alkenyl, or acyl, and a is 0, 1, or 2, and each R³ is independently selected from the group consisting of the hydrogen atom and alkyl, and
(E) platinum catalyst in a quantity sufficient to effect cure of the composition.

The organopolysiloxane (A), which is the base component of the present composition must contain at least 2 silicon-bonded alkenyl groups in each molecule. The silicon-bonded alkenyl in component (A) can be exemplified by vinyl, allyl, butenyl, pentenyl, hexenyl, and heptenyl with vinyl being particularly preferred. The non-alkenyl silicon-bonded groups in component (A) can be exemplified by alkyl such as methyl, ethyl, propyl, butyl, pentyl, and hexyl; aryl such as phenyl, tolyl, and xylyl; aralkyl such as benzyl and phenethyl; and halogenated alkyl such as 3-chloropropyl and 3,3,3-trifluoropropyl. Methyl is particularly preferred for the non-alkenyl silicon-bonded groups in component (A). The viscosity of component (A) at 25°C is preferably at least 100 mPa·s, particularly preferably is from 100 to 1,000,000 mPa·s, and even more preferably is from 1,000 to 500,000 mPa·s.

The organopolysiloxane (A) is exemplified by dimethylvinylsiloxy-endblocked dimethylpolysiloxanes, dimethylvinylsiloxy-endblocked methylvinylsiloxane-dimethylsiloxane copolymers, trimethylsiloxy-endblocked dimethylsiloxanemethylvinylsiloxane copolymers, organopolysiloxanes as afforded by replacing all or part of the methyl in the foregoing organopolysiloxanes with ethyl or phenyl, and mixtures of two or more of the foregoing organopolysiloxanes.

The diorganopolysiloxane (B) functions to cure the subject composition and is characterized by the fact that it contains silicon-bonded hydrogen only at its two molecular chain terminals. The silicon-bonded organic groups in component (B) can be exemplified by alkyl such as methyl, ethyl, propyl, butyl, pentyl, and hexyl; aryl such as phenyl, tolyl, and xylyl; aralkyl such as benzyl and phenethyl; and halogenated alkyl such as 3-chloropropyl and 3,3,3-trifluoropropyl. Methyl is preferred for the silicon-bonded organic groups in (B). While the viscosity of component (B) at 25°C is not critical, this viscosity is preferably from 1 to 10,000 mPa·s and more preferably is from 1 to 500 mPa·s.

The diorganopolysiloxane (B) can be specifically exemplified by dimethylhydrogensiloxy-endblocked dimethylpolysiloxanes and dimethylhydrogensiloxy-endblocked dimethylsiloxane-methylphenylsiloxane copolymers.

The component (B) content should provide a value from 0.01 to 10, preferably from 0.1 to 10, and more preferably from 0.1 to 5 for the molar ratio of the silicon-bonded hydrogen in component (B) to the silicon-bonded alkenyl in component (A). When this molar ratio is below the lower limit of the aforementioned range, a tendency arises for the corresponding composition to exhibit an unsatisfactory cure and/or for the cured silicone rubber to exhibit a poor range of substrate adherence. A tendency for the mechanical properties of the cured silicone rubber to be impaired occurs when this molar ratio is above the upper limit on the aforementioned range.

Organopolysiloxane (C) also functions to cure the subject composition and is characterized by the fact that it contains at least 3 silicon-bonded hydrogens in each molecule. The silicon-bonded organic groups in component (C) can be exemplified by alkyl such as methyl, ethyl, propyl, butyl, pentyl, and hexyl; aryl such as phenyl, tolyl, and xylyl; aralkyl such as benzyl and phenethyl; and halogenated alkyl such as 3-chloropropyl and 3,3,3-trifluoropropyl. Methyl is preferred for the silicon-bonded organic groups in component (C). While the viscosity of component (C) at 25°C is not critical, this viscosity is preferably from 1 to 10,000 mPa·s and more preferably is from 1 to 500 mPa·s.

The organopolysiloxane (C) can be specifically exemplified by trimethylsiloxy-endblocked dimethylsiloxane-methylhydrogensiloxane copolymers, trimethylsiloxy-endblocked dimethylsiloxane-methylphenylsiloxanemethylhydrogensiloxane copolymers, dimethylhydrogensiloxy-endblocked dimethylsiloxane-methylhydrogensiloxane copolymers, organopolysiloxanes comprising (CH₃)₂HSiO_{1/2} and SiO_{4/2} siloxane units, organopolysiloxanes comprising (CH₃)₃SiO_{1/2}, (CH₃)₂HSiO_{1/2} and SiO_{4/2} siloxane units, tetramethyltetrahydrogencyclotetrasiloxane; and mixtures of two or more of the foregoing organopolysiloxanes.

The component (C) content should provide a value from 0.5 to 20, preferably from 0.5 to 10, and more preferably from 0.5 to 5 for the molar ratio of the silicon-bonded hydrogen in component (C) to the silicon-bonded alkenyl in component (A). When this molar ratio is below the lower limit of the aforementioned range, a tendency arises for the corresponding composition to exhibit an unsatisfactory cure and/or for the cured silicone rubber to exhibit a poor range of substrate adherence. A tendency for the mechanical properties of the cured silicone rubber to be impaired occurs when this molar ratio is above the upper limit of the aforementioned range.

The carbasilatrane derivative (D) functions to improve the adherence of the present composition to substrates. This carbasilatrane derivative (D) is described by the following general formula. 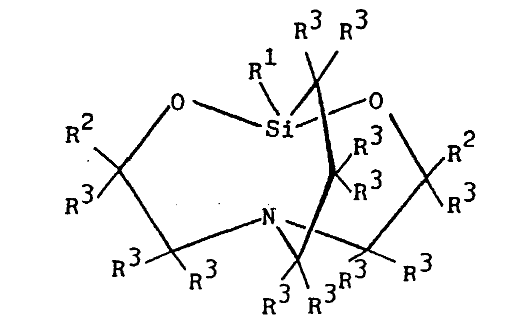 R¹ in this general formula can be alkyl or alkoxy. The alkyl encompassed by R¹ can be exemplified by methyl, ethyl, and propyl, while the alkoxy encompassed by R¹ can be exemplified by methoxy, ethoxy, and propoxy. R¹ in the preceding general formula for the carbasilatrane derivative is preferably alkoxy and more preferably is selected from methoxy and ethoxy. Each R² in the preceding general formula is independently selected from the group consisting of 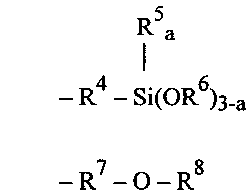 and
where R⁴ is alkylene or alkyleneoxyalkylene, R⁵ is monovalent hydrocarbyl, R⁶ is alkyl, R⁷ is alkylene, R⁸ is alkyl, alkenyl, or acyl, and a is 0, 1, or 2 and preferably is 0. The alkylene encompassed by R⁴ can be exemplified by methylene, ethylene, propylene, butylene, pentylene, hexylene, heptylene, and octylene with butylene and octylene being preferred. The alkyleneoxyalkylene encompassed by R⁴ can be exemplified by methyleneoxyethylene, methyleneoxypropylene, methyleneoxybutylene, ethyleneoxyethylene, and ethyleneoxypropylene with methyleneoxypropylene being preferred. The monovalent hydrocarbyl R⁵ can be exemplified by alkyl such as methyl, ethyl, and propyl; alkenyl such as vinyl, allyl, and butenyl; and aryl such as phenyl and tolyl. Methyl is preferred for R⁵. The alkyl R⁶ can be exemplified by methyl, ethyl, and propyl with methyl and ethyl being preferred. The alkylene R⁷ can be exemplified by methylene, ethylene, propylene, butylene, pentylene, hexylene, heptylene, and octylene with methylene being preferred. The alkyl encompassed by R⁸ can be exemplified by methyl, ethyl, and propyl; the alkenyl encompassed by R⁸ can be exemplified by vinyl, allyl, and butenyl; and the acyl encompassed by R⁸ can be exemplified by acetyl, propionyl, butyryl, acryloyl, and methacryloyl. R⁸ is preferably selected from allyl and methacryloyl. R² in the general formula for the carbasilatrane derivative (D) can be exemplified by the following groups.

-C₄H₈-Si(OCH₃)₃

-C₈H₁₆-Si(OCH₃)₃

-CH₂OC₃H₆-Si(OCH₃)₃

-CH₂-O-CH₂CH=CH₂

-CH₂-O-C(=O)-C(CH₃)=CH₂

Each R³ in the preceding general formula for the carbasilatrane derivative (D) is independently selected from the hydrogen atom and alkyl. The alkyl encompassed by R³ can be exemplified by methyl, ethyl, and propyl, however all the R³ are preferably the hydrogen atom.

The component (D) content should be from 0.01 to 20 weight parts, preferably from 0.1 to 10 weight parts, and more preferably from 0.1 to 5 weight parts, in each case per 100 weight parts component (A). When the component (D) content is below the lower limit of the aforementioned range, the tendency arises for the cured silicone rubber to exhibit a poor range of substrate adherence. A tendency for the mechanical properties of the cured silicone rubber to be impaired occurs when the component (D) content is above the upper limit of the aforementioned range.

The platinum catalyst (E) is a catalyst that promotes or accelerates the cure of the present composition. The platinum catalyst (E) can be exemplified by platinum black, platinum supported on alumina powder, platinum supported on silica powder, platinum supported on carbon powder, chloroplatinic acid, alcohol solutions of chloroplatinic acid, olefin complexes of platinum, and complexes of alkenyl-functional organosiloxane oligomer with platinum. Component (E) can also take the form of micropowder comprising a platinum catalyst as described above dispersed in a thermoplastic organic resin such as methyl methacrylate resin, polycarbonate resin, polystyrene resin, and silicone resin.

Component (E) should be present in the present composition in sufficient quantity to effect cure of the composition. Component (E) preferably provides from 0.01 to 500 weight parts platinum metal per 1,000,000 weight parts component (A) and more preferably provides from 0.1 to 100 weight parts platinum metal per 1,000,000 weight parts component (A).

As necessary or desired, the present composition may contain as an optional component an adhesion promoter such as methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis(trimethoxysilyl)propane, and bis(trimethoxysilyl)hexane.

The present composition can also contain inorganic filler on an optional basis. This inorganic filler can be exemplified by micropowders of precipitated silica, fumed silica, calcined silica, fumed titanium oxide, crushed quartz, diatomaceous earth, aluminosilicate, iron oxide, zinc oxide, calcium carbonate, carbon black, alumina, aluminum oxide, silver, and nickel. These inorganic fillers can be used without treatment or can be used after surface treatment with a surface treatment agent such as organoalkoxysilane, organochlorosilane, and hexaorganodisilazane.

The content of the aforementioned inorganic filler in the present composition is preferably from 5 to 500 weight parts per 100 weight parts component (A) and more preferably is from 10 to 300 weight parts per 100 weight parts component (A). An inorganic filler content below the lower limit of the foregoing range results in a tendency for the cured silicone rubber to have poor mechanical strength. An inorganic filler content above the upper limit of the foregoing range tends to make it quite difficult to prepare a uniform silicone rubber composition.

A curing reaction inhibitor may also be added to the present composition in order to improve its storage stability and/or to improve its handling characteristics. This curing inhibitor can be exemplified by acetylenic compounds such as 3-methyl-1-butyn-3-ol, 3,5-dimethyl-1-hexyn-3-ol, and 3-phenyl-1-butyn-3-ol; ene-yne compounds such as 3-methyl-3-penten-1-yne and 3,5-dimethyl-3-hexen-1-yne; organosiloxane oligomers that contain at least 5 weight% alkenyl in the molecule, such as 1,3,5,7-tetramethyl-1,3,5,7-tetravinylcyclotetrasiloxane, 1,3,5,7-tetramethyl-1,3,5,7-tetrahexenylcyclotetrasiloxane, silanol-endblocked methylvinylsiloxane oligomers, and silanol-endblocked methylvinylsiloxane-dimethylsiloxane co-oligomers; triazoles such as benzotriazole; phosphines; mercaptans; and hydrazines. The curing reaction inhibitor is preferably added at from 0.001 to 5 weight parts per 100 weight parts component (A).

The present composition can be obtained by mixing components (A) through (E) and any optional components to homogeneity. The present composition can be prepared, for example, by mixing components (A) through (E) and any optional components to homogeneity using a known mixer such as a two-roll mill, kneader mixer, or Ross mixer.

### Examples

The present silicone rubber composition will be explained in greater detail through working examples. The values reported for the viscosity in the examples were measured at 25°C.

Reference Example. 179 g (1 mole) 3-Aminopropyltrimethoxysilane and 472 g (2 moles) 3-glycidoxypropyltrimethoxysilane were introduced into a I liter flask and gradually heated with stirring and were stirred for 114 hours while heating at 50°C. During this time, the presence of methanol in the reaction system was confirmed by gas chromatographic analysis of the reaction mixture. The reaction was followed by cooling to room temperature and elimination of the methanol by-product generated by the reaction. Analysis of the resulting product by ²⁹Si nuclear magnetic resonance spectroscopy confirmed production of the carbasilatrane derivative with the following formula, with peaks at -62.5 ppm, -63.8 ppm, and -64.9 ppm originating with the respective stereoisomers. The content of this carbasilatrane derivative was 86 weight%.

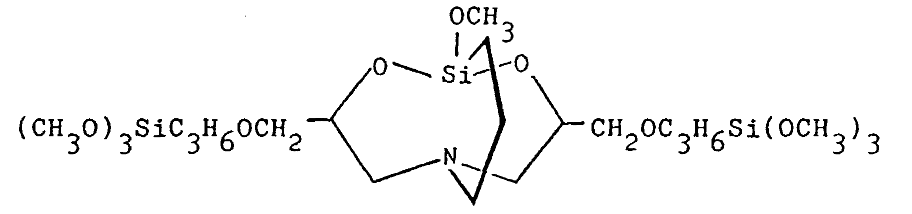

Example 1. The following were mixed to homogeneity: 100 weight parts dimethylvinylsiloxy-endblocked dimethylpolysiloxane with a viscosity of 40,000 mPa·s, 15 weight parts fumed silica with a BET specific surface area of 200 m²/g, 2.5 weight parts hexamethyldisilazane as surface treatment agent for the silica, and 1 weight part water. This was followed by additional mixing for 2 hours under a vacuum with heating at 170°C to form a silicone base compound. After cooling, a silicone rubber composition was prepared by mixing the following into each 100 weight parts of the obtained base compound: 1 weight part dimethylhydrogensiloxy-endblocked dimethylpolysiloxane with a viscosity of 10 mPa·s (this afforded a value of 0.5 for the molar ratio of the silicon-bonded hydrogen in this siloxane to the silicon-bonded vinyl in the dimethylpolysiloxane present in the base compound), 1.6 weight parts trimethylsiloxy-endblocked dimethylsiloxane-methylhydrogensiloxane copolymer with a viscosity of 6 mPa·s (contained 4 silicon-bonded hydrogens in each molecule, this afforded a value of 2.5 for the molar ratio of the silicon-bonded hydrogen in this copolymer to the silicon-bonded vinyl in the dimethylpolysiloxane present in the base compound), 1 weight part of the carbasilatrane derivative synthesized in the Reference Example, 0.2 weight part silanol-endblocked methylvinylsiloxane-dimethylsiloxane co-oligomer (viscosity = 40 mPa·s) as a cure inhibitor, and a 1,3-divinyltetramethyldisiloxane solution of a 1,3-divinyltetramethyldisiloxane complex of platinum (added in a quantity that provided 7 weight parts platinum metal for each 1,000,000 weight parts of the dimethylpolysiloxane present in the base compound).

The resulting silicone rubber composition was coated on the test specimens reported in Table 1. Curing was carried out by standing for 7 days at 25°C. The adherence of the silicone rubber to the test specimens was evaluated as described below. The results are reported in Table 1.
- + :: the silicone rubber underwent cohesive failure when the silicone rubber was peeled from the test specimen
- × :: the silicone rubber underwent interfacial delamination from the test specimen when the silicone rubber was peeled from the test specimen

Comparative Example 1. The following were mixed to homogeneity: 100 weight parts dimethylvinylsiloxy-endblocked dimethylpolysiloxane with a viscosity of 40,000 mPa·s, 15 weight parts fumed silica with a BET specific surface area of 200 m²/g, 2.5 weight parts hexamethyldisilazane as surface treatment agent for the silica, and 1 weight part water. This was followed by additional mixing for 2 hours under a vacuum with heating to 170°C to form a silicone base compound. After cooling, a silicone rubber composition was prepared by mixing the following into each 100 weight parts of the obtained base compound: 2.6 weight parts trimethylsiloxy-endblocked dimethylsiloxane-methylhydrogensiloxane copolymer with a viscosity of 6 mPa·s (contained 4 silicon-bonded hydrogens in each molecule, this afforded a value of 3 for the molar ratio of the silicon-bonded hydrogen in this copolymer to the silicon-bonded vinyl in the dimethylpolysiloxane present in the base compound), 1 weight part of the carbasilatrane derivative synthesized in the Reference Example, 0.2 weight part silanol-endblocked methylvinylsiloxane-dimethylsiloxane co-oligomer (viscosity = 40 mPa·s) as a cure inhibitor, and a 1,3-divinyltetramethyldisiloxane solution of a 1,3-divinyltetramethyldisiloxane complex of platinum (added in a quantity that provided 7 weight parts platinum metal for each 1,000,000 weight parts of the dimethylpolysiloxane present in the base compound). The adherence of this silicone rubber composition was evaluated as in Example 1, and the obtained results are also reported in Table 1.

Comparative Example 2. A silicone rubber composition was prepared as in Example 1, but in this case without the addition of the carbasilatrane derivative that was used in Example 1. The adherence of this silicone rubber composition was evaluated as in Example 1 and the obtained results are also reported in Table 1.

**Table 1.**

| | Example 1 | Comparative Example 1 | Comparative Example 2 |
|---|---|---|---|
| adherence | | | |
| nylon-6 | + | + | × |
| polybutylene terephthalate | + | + | × |
| polycarbonate | + | + | × |
| copper | + | × | × |
| vinyl chloride-coated steel sheet | + | × | × |

## Claims

1. A silicone rubber composition comprising
(A) 100 weight parts organopolysiloxane containing at least two silicon-bonded alkenyl groups in each molecule,
(B) a SiH-functional diorganopolysiloxane having silicon-bonded hydrogen only at its two molecular chain terminals in an amount providing from 0.01 to 10 moles of silicon-bonded hydrogen per mole of silicon-bonded alkenyl in component (A),
(C) an organopolysiloxane that contains at least three silicon-bonded hydrogen atoms in each molecule in an amount providing 0.5 to 20 moles of silicon-bonded hydrogen per mole of silicon-bonded alkenyl in component (A),
(D) 0.01 to 20 weight parts of a carbasilatrane derivative with the following general formula: 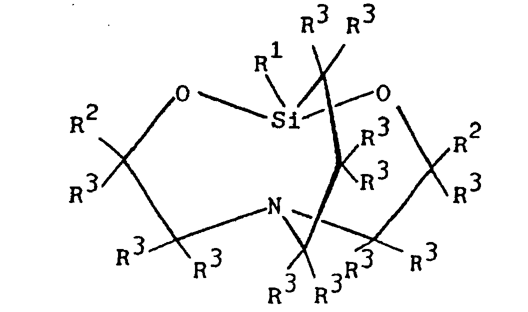 where R¹ is alkyl or alkoxy, each R² is independently selected from: 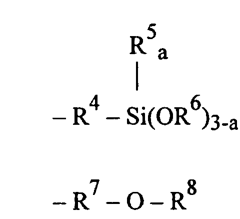 and
where R⁴ is alkylene or alkyleneoxyalkylene, R⁵ is monovalent hydrocarbyl, R⁶ is alkyl, R⁷ is alkylene, R⁸ is alkyl, alkenyl, or acyl, and **a** is 0, 1 or 2, and each R³ is independently selected from a hydrogen atom and alkyl, and
(E) platinum catalyst in a quantity sufficient to effect cure of the composition.

2. A silicone rubber composition according to claim 1, wherein the viscosity of component (A) at 25°C is from 1,000 to 500,000 mPa·s.

3. A silicone rubber composition according to claim 1 or 2, wherein the viscosity of component (B) at 25°C is from 1 to 500 mPa·s.

4. A silicone rubber composition according to any of claims 1 to 3, wherein component (B) is selected from dimethylhydrogensiloxy-endblocked dimethypolysiloxanes and dimethylhydrogensiloxy-endblocked dimethylsiloxane-methylphenylsiloxane copolymers.

5. A silicone rubber composition according to any of claims 1 to 4, wherein the molar ratio of silicon-bonded hydrogen in component (B) to silicon-bonded alkenyl in component (A) is 0.1 to 5.

6. A silicone rubber composition according to any of claims 1 to 5, wherein the viscosity of component (C) at 25°C is from 1 to 500 mPa·s.

7. A silicone rubber composition according to any of claims 1 to 6, wherein component (C) is a trimethylsiloxy-endblocked dimethylsiloxane-methylhydrogensiloxane copolymer.

8. A silicone rubber composition according to any of claims 1 to 7, wherein the molar ratio of the silicon-bonded hydrogen in component (C) to the silicon-bonded alkenyl in component (A) is 0.5 to 5.

9. A silicone rubber composition according to any of claims 1 to 8, wherein 0.1 to 5 weight parts of component (D) is added per 100 weight parts of component (A).

10. A silicone rubber composition according to any of claims 1 to 9, wherein component (D) has the formula:
